# EUROPÄISCHE PATENTANMELDUNG

(11) **EP 1 247 943 A1**
(43) Veröffentlichungstag der Anmeldung: **09.10.2002**
(21) Anmeldenummer: 01108479.5
(22) Anmeldetag: 04.04.2001
(51) Int. Cl.: F01D 11/08, F01D 25/12

(54) **Formstück zur Bildung eines kühlbaren Turbinen-Mantelrings**

(71) Anmelder: SIEMENS AKTIENGESELLSCHAFT, 80333 München (DE)
(72) Erfinder: Tiemann, Peter, 58452 Witten (DE)

(57) **Zusammenfassung**

Ein Formstück (30) zur Bildung eines Führungsrings (21) für eine Gasturbine (1) soll einerseits mit besonders geringem Aufwand herstellbar, und andererseits auf besonders wirksame Weise mit Dampf als Kühlmittel kühlbar ausgelegt sein. Dazu umfaßt das Formstück (30) erfindungsgemäß eine Grundplatte (34), die gemeinsam mit einem ihr zugeordneten Leitblech (38,44,52) einen sich im Querschnitt im wesentlichen über ihre gesamte Breite, bezogen auf die axiable Richtung (x) des Führungsrings (20,21), erstreckenden Strömungskanal (36) für ein Kühlmittel bildet.

## Beschreibung

Die Erfindung bezieht sich auf ein Formstück zur Bildung eines Führungsrings für eine Gasturbine. Sie betrifft weiter eine Gasturbine mit einem aus einer Anzahl von derartigen Formstücken zusammengesetzten Führungsring.

Gasturbinen werden in vielen Bereichen zum Antrieb von Generatoren oder von Arbeitsmaschinen eingesetzt. Dabei wird der Energieinhalt eines Brennstoffs zur Erzeugung einer Rotationsbewegung einer Turbinenwelle benutzt. Der Brennstoff wird dazu in einer Brennkammer verbrannt, wobei von einem Luftverdichter verdichtete Luft zugeführt wird. Das in der Brennkammer durch die Verbrennung des Brennstoffs erzeugte, unter hohem Druck und unter hoher Temperatur stehende Arbeitsmedium wird dabei über eine der Brennkammer nachgeschaltete Turbineneinheit geführt, wo es sich arbeitsleistend entspannt.

Zur Erzeugung der Rotationsbewegung der Turbinenwelle sind dabei an dieser eine Anzahl von üblicherweise in Schaufelgruppen oder Schaufelreihen zusammengefaßten Laufschaufeln angeordnet, die über einen Impulsübertrag aus dem Strömungsmedium die Turbinenwelle antreiben. Zur Führung des Strömungsmediums in der Turbineneinheit sind zudem üblicherweise zwischen benachbarten Laufschaufelreihen mit dem Turbinengehäuse verbundene Leitschaufelreihen angeordnet. Die Leitschaufeln weisen dabei zur geeigneten Führung des Arbeitsmediums ein Schaufelblatt auf, an das endseitig zur Befestigung der Turbinenschaufel am jeweiligen Trägerkörper ein auch als Plattform bezeichneter Schaufelfuß angeformt ist. Diese Plattform, die üblicherweise an einer Innenwand der Turbineneinheit befestigt oder verhakt ist, begrenzt dabei mit ihrer dem Innenraum der Turbineneinheit zugewandten Oberfläche zudem den Strömungsbereich für das die Turbineneinheit durchströmende Arbeitsmedium. Um für das Arbeitsmedium dabei einen Strömungskanal mit vergleichsweise glatter Innenoberfläche zu bilden, sind zudem in der Turbineneinheit üblicherweise zwischen den Plattformen von in Strömungsrichtung des Arbeitsmediums gesehen benachbarten Leitschaufelreihen sogenannte Führungsringe angeordnet, die die in Strömungsrichtung des Arbeitsmediums gesehen von den Plattformen benachbarter Leitschaufeln gelassene Lücke überbrücken.

Bei der Auslegung von Gasturbinen ist zusätzlich zur erreichbaren Leistung üblicherweise ein besonders hoher Wirkungsgrad ein Auslegungsziel. Eine Erhöhung des Wirkungsgrades läßt sich dabei aus thermodynamischen Gründen grundsätzlich durch eine Erhöhung der Austrittstemperatur erreichen, mit dem das Arbeitsmedium aus der Brennkammer ab- und in die Turbineneinheit einströmt. Daher werden Temperaturen von etwa 1200 °C bis 1300 °C für derartige Gasturbinen angestrebt und auch erreicht.

Bei derartig hohen Temperaturen des Arbeitsmediums sind jedoch die diesem ausgesetzten Komponenten und Bauteile hohen thermischen Belastungen ausgesetzt. Um dennoch bei hoher Zuverlässigkeit eine vergleichsweise lange Lebensdauer der betroffenen Komponenten zu gewährleisten, ist üblicherweise eine Kühlung der betroffenen Komponenten vorgesehen. Demzufolge sind üblicherweise auch die am Heißgaskanal angeordneten Führungsringe kühlbar ausgebildet. Diese erwärmen sich im Betrieb vergleichsweise stark, so daß mit vergleichsweise großen thermischen Ausdehnungen zu rechnen ist.

Als Kühlmittel kommt in einer derartigen Gasturbine üblicherweise in der Art einer offenen Kühlung Kühlluft zum Einsatz. Die als Kühlmittel vorgesehene Kühlluft wird dabei der jeweiligen Turbinenschaufel oder Komponente über einen integrierten Kühlmittelkanal zugeführt. Von diesem ausgehend durchströmt die Kühlluft das jeweilige Bauteil in abzweigenden Kanälen, die üblicherweise austrittseitig offengelassen sind. Nach dem Durchströmen der jeweiligen Komponente tritt die Kühlluft somit aus dieser aus und vermischt sich dabei mit dem in der Turbineneinheit geführten Arbeitsmedium.

Allerdings ist bei Verwendung von Kühlluft als Kühlmittel die erreichbare Kühlwirkung nur begrenzt. Dementsprechend ist für eine derartig gekühlte Gasturbine selbst bei Verwendung von Wärmedämmschichten für die thermisch beaufschlagten Komponenten der erreichte Wirkungsgrad begrenzt, zumal ein gesteigerter Bedarf an Kühlluft Verluste im verfügbaren Verdichtermassenstrom für die Verbrennung bedeuten würde, die ihrerseits nur im begrenzten Ausmaß hingenommen werden können. Es kann daher wünschenswert sein, unter Abkehr von einer kühlluftbasierten Kühlung eine Kühlung unter Verwendung von Kühldampf als Kühlmedium bereitzustellen. Dabei erweist sich jedoch gerade die Bereitstellung eines zuverlässig und ausreichend kühlbaren Führungsrings, der an sich eine vergleichsweise einfache Komponente darstellt, als besonders aufwendig.

Der Erfindung liegt daher die Aufgabe zugrunde, ein Formstück zur Bildung eines Führungsrings für eine Gasturbine anzugeben, das mit besonders geringem Aufwand herstellbar und zudem besonders wirksam mit Dampf als Kühlmittel kühlbar ist. Zudem soll eine Gasturbine mit einem zuverlässig mit Dampf als Kühlmedium kühlbaren, auf besonders einfache Weise herstellbaren Führungsring angegeben werden.

Bezüglich des Formstücks wird diese Aufgabe erfindungsgemäß gelöst mit einer Grundplatte, die gemeinsam mit einem ihr zugeordneten Leitblech einen sich im Querschnitt im wesentlichen über ihre gesamte Breite, bezogen auf die axiale Richtung des Führungsrings, erstreckenden Strömungskanal für ein Kühlmittel bildet.

Die Erfindung geht von der Überlegung aus, daß für eine besonders einfache und somit auch kostengünstige Ausführung des Führungsrings der Strömungsweg des ihn durchströmenden Kühlmediums besonders einfach gehalten werden sollte. Um dabei eine besonders zuverlässige Kühlung sicherzustellen, ist eine im wesentlichen flächige Beaufschlagung des der Heißgasseite ausgesetzten Materialstücks, nämlich der Grundplatte, vorgesehen. Um dabei die bei Verwendung von Dampf als Kühlmittel erforderliche Abschottung des Strömungswegs des Kühlmittels gegenüber dem Innenraum der Gasturbine sicherzustellen, ist der Grundplatte zur Bildung eines im wesentlichen geschlossenen, flächig ausgestalteten Strömungskanals ein Leitblech zugeordnet.

Eine zuverlässige Kühlung bei vergleichsweise geringem Aufwand an Kühlmedium ist dabei ermöglicht, indem die Bleche und insbesondere das Leitblech vorzugsweise als vergleichsweise dünnes Blech ausgeführt sind.

Bei der Verwendung von Dampf als Kühlmedium sollte der Strömungsweg des Kühlmediums besonders gut gegen den Strömungsraum des Arbeitsmediums in der Turbine abgeschottet sein. Um unter dieser Voraussetzung mit besonders einfachen Mitteln zusätzlich die flächige Beaufschlagung der Grundplatte mit Dampf als Kühlmedium zu ermöglichen, ist vorteilhafterweise auf der der Grundplatte abgewandten Seite des Leitblechs ein zweites Leitblech angeordnet, das gemeinsam mit dem ersten Leitblech einen Zustromraum für das Kühlmittel bildet. Der Zustromraum kommuniziert dabei zweckmäßigerweise in einem Einströmbereich mit dem durch das erste Leitblech und die Grundplatte gebildeten Strömungskanal. In den Zustromraum mündet dabei vorteilhafterweise eine Dampfzuleitung.

In weiterer vorteilhafter Ausgestaltung ist das Formstück in analoger Weise zur Abführung des als Kühlmittel vorgesehenen Dampfes ausgebildet. Dabei ist dem zweiten Leitblech auf seiner dem ersten Leitblech abgewandten Seite ein drittes Leitblech zugeordnet. Dieses bildet gemeinsam mit dem zweiten Leitblech einen Abströmraum für das Kühlmittel. Die Leitbleche sind dabei zweckmäßigerweise derart ausgebildet, daß der Abströmraum für das Kühlmittel in einem Ableitbereich mit dem durch die Grundplatte und das erste Leitblech gebildeten Strömungskanal kommuniziert. Vorteilhafterweise mündet dabei eine Dampfableitung in den Abströmraum.

Ein derartig weitergebildetes Formstück weist somit zusätzlich zu einer Grundplatte zumindest drei in der Art eines Stapels übereinander angeordnete Leitbleche auf. Die von jeweils zwei Leitblechen oder von einem Leitblech und der Grundplatte gebildeten Zwischenräume dienen dabei aufgabenspezifisch als Strömungsraum für das Kühlmittel, wobei ein Zustromraum, ein Strömungskanal und ein Abströmraum vorgesehen sind. Somit ist auf besonders einfache Weise ein hinsichtlich seiner Funktionalität vollständiges und besonders flexibles Formstück geschaffen. Gerade die Schaffung der verschiedenen Strömungsbereiche für das Kühlmittel sind dabei durch die Verwendung von Leitblechen auf besonders einfache Weise herstellbar.

Der Aufwand für die Kühlung des Formstücks ist besonders gering gehalten, indem die verwendeten Leitbleche und/oder die verwendete Grundplatte besonders dünn gehalten sind. Um bei der Verwendung von vergleichsweise dünnen Blechen eine besonders hohe mechanische Festigkeit und Belastbarkeit des Formstücks zu gewährleisten, weist die Grundplatte in besonders vorteilhafter Ausgestaltung oberseitig eine Anzahl von im wesentlichen in axialer Richtung des Führungsrings verlaufenden Versteifungsrippen auf. Diese bilden im wesentlichen parallel geschaltete Strömungskanäle für das Kühlmittel.

Die Verwendung von Dampf als Kühlmittel für die Gasturbine erfordert eine vergleichsweise hohe Dichtigkeit der entsprechenden Dampfzu- und -abführungen, so daß eine Leckage des Kühldampfes in den Strömungsbereich der Gasturbine hinein sicher vermieden ist. Dabei sollte insbesondere auch die Dampfeinleitung in den und die Dampfableitung aus dem Führungsring besonders zuverlässig abgedichtet sein. Dazu können entsprechende Rohrverschraubungen am Dampfein- und -auslaß des Formstücks vorgesehen sein. Um den dazu und insbesondere für die Montage der entsprechenden Dampfleitungen erforderlichen Raum zu Verfügung zu stellen, ist jedes zur Bildung des Führungsrings vorgesehene Formstück zweckmäßigerweise für eine in Radial- und in Axialrichtung des Führungsrings gesehen zentrale Verhakung in der Gasturbine ausgebildet. Gerade eine derart zentral ausgestaltete Verhakung erlaubt nämlich, die auch bei einer offen gekühlten Gasturbine vorhandenen Kühlmittelzuund -abführungen im wesentlichen unverändert beizubehalten, wobei bei der Verwendung von Dampf als Kühlmittel lediglich im Kontaktbereich mit dem Führungsring modifizierte Verschraubungen zum Einsatz kommen. Mit anderen Worten: bei einer derartigen Auslegung ist der für die Herstellung der kühlmittelseitigen Verbindungen erforderliche Raum durch die zentrale Positionierung der Verhakung bereitgestellt, ohne daß hierfür eine Veränderung der räumlichen Anordnung oder Führung der bei einer offen gekühlten Gasturbine vorgesehenen Kühlmittelkanäle erforderlich wäre. Somit kann mit besonders geringem Aufwand im Sinne eines "Delta-Engineering" das Konzept einer offen gekühlten auf eine geschlossen (mit Dampf als Kühlmittel) gekühlten Gasturbine übertragen werden.

Eine derartig zentral angeordnete Verhakung ist auf besonders einfache Weise bereitstellbar, indem vorteilhafterweise jeweils an einer Mehrzahl benachbarter Versteifungsrippen der Grundplatte ein Trägerhaken unter Bildung von durch die Grundplatte, jeweils zwei benachbarte Versteifungsrippen und den jeweiligen Trägerhaken begrenzten Durchströmöffnungen angeordnet ist. Die Trägerhaken sind somit in einzelstehender Bauweise auf jeweils eine Anzahl von Versteifungsrippen, beispielsweise zwei bis vier, aufgesetzt, wobei unterhalb jedes Trägerhakens jeweils eine Anzahl von Durchgängen oder Durchströmöffnungen für das Kühlmittel gebildet sind. Die Trägerhaken sind somit vom Kühlmittel unterströmt, so daß eine besonders wirkungsvolle Kühlung ermöglicht und Wärmespannungen zudem besonders gering gehalten sind. Der oder jeder Trägerhaken ist dabei in weiterer vorteilhafter Ausgestaltung in axialer Richtung des Führungsrings gesehen zentriert angeordnet.

Bezüglich einer Gasturbine mit einer Anzahl von jeweils zu Laufschaufelreihen zusammengefaßten, an einer Turbinenwelle angeordneten Laufschaufeln und mit einer Anzahl von jeweils zu Leitschaufelreihen zusammengefaßten, mit einem Turbinengehäuse verbundenen Leitschaufeln wird die genannte Aufgabe gelöst, indem im Innenbereich des Turbinengehäuses ein aus einer Anzahl von den genannten Formstücken zusammengesetzter Führungsring angeordnet ist.

Vorteilhafterweise ist der Führungsring dabei in Strömungsrichtung des Arbeitsmediums gesehen zwischen der ersten Leitschaufelreihe und der zweiten Leitschaufelreihe angeordnet.

Die mit der Erfindung erzielten Vorteile bestehen insbesondere darin, daß durch das der Grundplatte zugeordnete Leitblech die Bildung eines sich im Querschnitt im wesentlichen über die gesamt Grundplatte erstreckten Strömungskanals ermöglicht ist, so daß eine weitgehend flächige Beaufschlagung der Grundplatte mit Kühlmittel gewährleistet ist. Durch das erste Leitblech und insbesondere auch durch das zusätzlich vorgesehene zweite und dritte Leitblech erfolgt auf besonders einfache Weise und mit besonders geringem Herstellungsaufwand eine günstige Führung des Kühlmittels im Bereich des Führungsrings, wobei das erste Leitblech der Führung des Kühlmittels über der heißgasbeaufschlagten Grundplatte unter Sicherstellung eines gewünschten Querschnitts dient. Das mittlere oder zweite Leitblech dient hingegen der Zuführung zwischen diesem Blech und dem ersten Leitblech hin zu einem Einströmbereich, von dem aus das Kühlmittel in den von der Grundplatte und dem ersten Leitblech gebildeten Strömungskanal gelangt. Das dritte Leitblech bildet hingegen gemeinsam mit dem zweiten Leitblech einen Abströmbereich für das Kühlmittel. Eine derartige Bauweise unter Bildung eines Stapels von Leitblechen ist auf besonders einfache Weise herstellbar, wobei auch noch vergleichsweise hohe Anforderungen an der Dichtigkeit erfüllt sind.

Ein Ausführungsbeispiel der Erfindung wird anhand einer Zeichnung näher erläutert. Darin zeigen:
- Figur 1: einen Halbschnitt durch eine Gasturbine,
- Figur 2: ein Formstück zur Bildung eines Führungsrings in perspektivischer Darstellung,
- Figuren 3, 4, 5: jeweils das Formstück nach Figur 2 im Querschnitt, und
- Figuren 6, 7: jeweils das Formstück nach Figur 2 im Längsschnitt.

Gleiche Teile sind in allen Figuren mit denselben Bezugszeichen versehen.

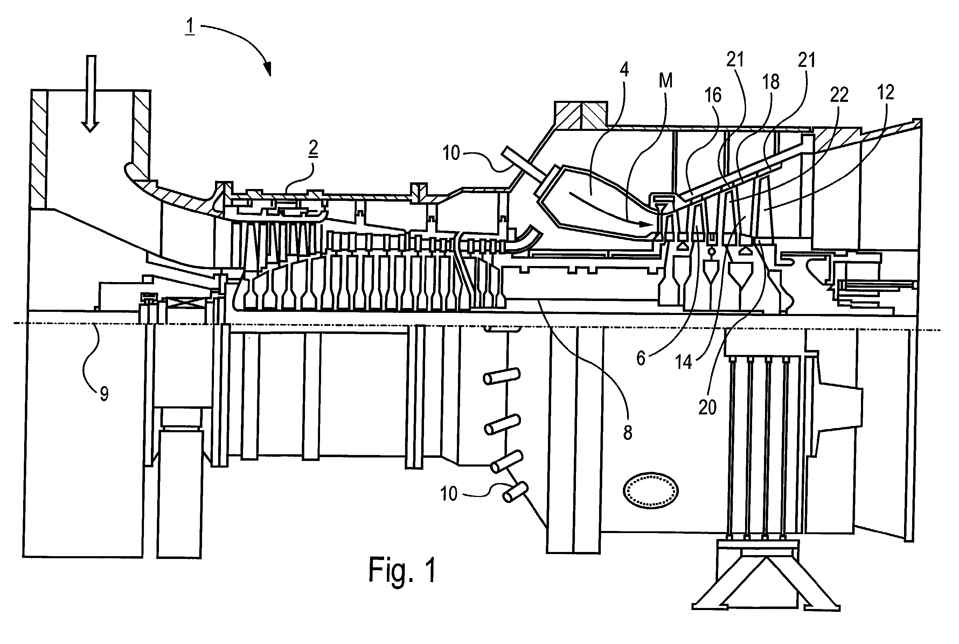

Die Gasturbine 1 gemäß Figur 1 weist einen Verdichter 2 für Verbrennungsluft, eine Brennkammer 4 sowie eine Turbine 6 zum Antrieb des Verdichters 2 und eines nicht dargestellten Generators oder einer Arbeitsmaschine auf. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse 9 rotierbar gelagert ist.

Die Brennkammer 4 ist mit einer Anzahl von Brennern 10 zur Verbrennung eines flüssigen oder gasförmigen Brennstoffs bestückt. Sie ist weiterhin an ihrer Innenwand mit nicht näher dargestellten Hitzeschildelementen versehen.

Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfaßt die Turbine 6 eine Anzahl von feststehenden Leitschaufeln 14, die ebenfalls kranzförmig unter der Bildung von Leitschaufelreihen an einem Innengehäuse 16 der Turbine 6 befestigt sind. Die Laufschaufeln 12 dienen dabei zum Antrieb der Turbinenwelle 8 durch Impulsübertrag vom die Turbine 6 durchströmenden Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinanderfolgenden Laufschaufelreihen oder Laufschaufelkränzen. Ein aufeinanderfolgendes Paar aus einem Kranz von Leitschaufeln 14 oder einer Leitschaufelreihe und aus einem Kranz von Laufschaufeln 12 oder einer Laufschaufelreihe wird dabei auch als Turbinenstufe bezeichnet.

Jede Leitschaufel 14 weist eine auch als Schaufelfuß bezeichnete Plattform 18 auf, die zur Fixierung der jeweiligen Leitschaufel 14 am Innengehäuse 16 der Turbine 6 als Wandelement angeordnet ist. Die Plattform 18 ist dabei ein thermisch vergleichsweise stark belastetes Bauteil, das die äußere Begrenzung eines Heißgaskanals für das die Turbine 6 durchströmende Arbeitsmedium M bildet. Jede Laufschaufel 12 ist in analoger Weise über eine auch als Schaufelfuß bezeichnete Plattform 20 an der Turbinenwelle 8 befestigt.

Zwischen den beabstandet voneinander angeordneten Plattformen 18 der Leitschaufeln 14 zweier benachbarter Leitschaufelreihen ist jeweils ein Führungsring 21 am Innengehäuse 16 der Turbine 6 angeordnet. Die äußere Oberfläche jedes Führungsrings 21 ist dabei ebenfalls dem heißen, die Turbine 6 durchströmenden Arbeitsmedium M ausgesetzt und in radialer Richtung vom äußeren Ende 22 der ihm gegenüber liegenden Laufschaufel 12 durch einen Spalt beabstandet. Die zwischen benachbarten Leitschaufelreihen angeordneten Führungsringe 21 dienen dabei insbesondere als Abdeckelemente, die die Innenwand des Innengehäuses 16 oder andere Gehäuse-Einbauteile vor einer thermischen Überbeanspruchung durch das die Turbine 6 durchströmende heiße Arbeitsmedium M schützen.

Zur Erzielung eines vergleichsweise hohen Wirkungsgrades ist die Gasturbine 1 für eine vergleichsweise hohe Austrittstemperatur des aus der Brennkammer 4 austretenden Arbeitsmediums M von etwa 1200 °C bis 1300 °C ausgelegt. Um dies zu ermöglichen, sind zumindest einige der Laufschaufeln 12 und der Leitschaufeln 14 kühlbar ausgelegt, wobei Dampf als Kühlmittel vorgesehen ist. Zusätzlich dazu sind auch die Führungsringe 21 durch Dampf kühlbar ausgebildet.

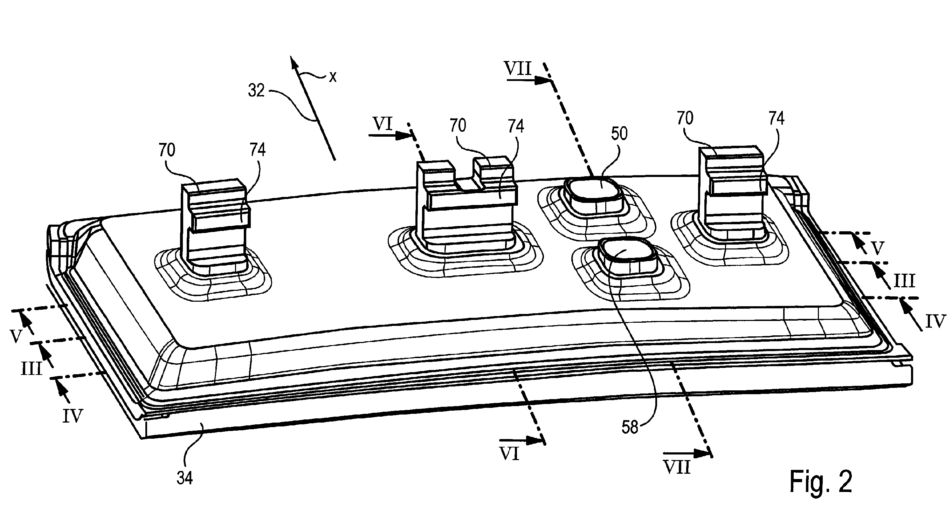

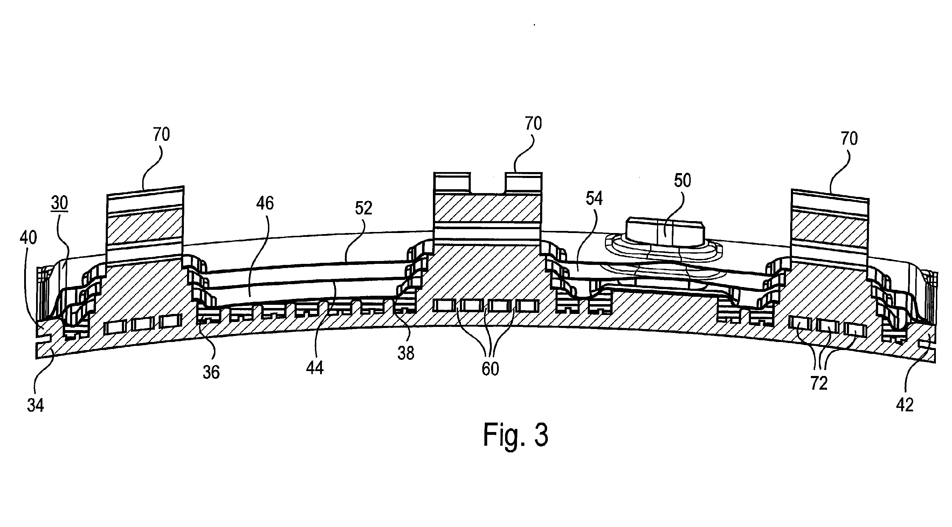

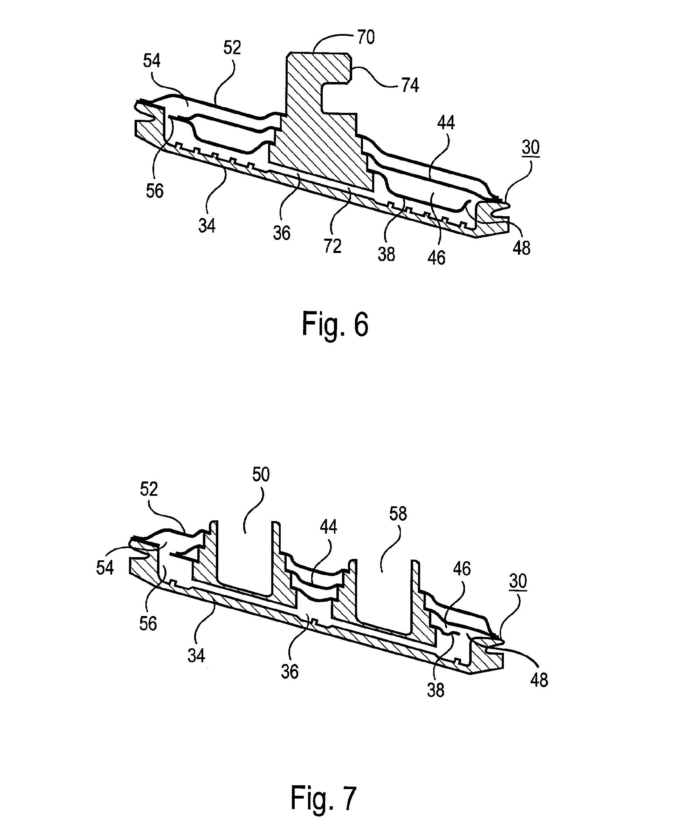

Dazu ist der Führungsring 21 jeweils aus einer Anzahl von Formstücken 30 zusammengesetzt. Ein zur Bildung des in Strömungsrichtung des Arbeitsmediums M gesehen ersten Führungsrings 21 vorgesehenes Formstück 30 ist in Figur 2 in perspektivischer Darstellung gezeigt. Das Formstück 30 ist weiterhin in den Figuren 3, 4 und 5 entlang der in Figur 2 angedeuteten Schnittlinien im Querschnitt und in den Figuren 6 und 7 entlang der in Figur 2 ebenfalls angedeuteten Schnittlinien im Längsschnitt gezeigt. Die Angaben "Querschnitt" und "Längsschnitt" beziehen sich dabei auf die im wesentlichen mit der Strömungsrichtung des Arbeitsmediums M in der Turbine 6 übereinstimmende, in der Figur 2 durch den Pfeil 32 symbolisierte axiale Richtung x des aus einer Anzahl der Formstücke 30 gebildeten Führungsrings 21.

Das Formstück 30 umfaßt, wie dies besonders aus den Figuren 3 bis 7 deutlich wird, eine Grundplatte 34, die in Umfangsrichtung des zu bildenden Führungsrings 21 kreissegmentartig gebogen ist, und die beim Betrieb der Gasturbine 1 dem die Turbine 6 durchströmenden Heißgasstrom unmittelbar ausgesetzt ist. Um dennoch einen sicheren Betrieb der Gasturbine 1 auch bei vergleichsweise hohen Temperaturen des Arbeitsmediums M zu gewährleisten, ist das Formstück 30 für eine im wesentlichen flächige Beaufschlagung der Grundplatte 34 mit Dampf als Kühlmittel ausgebildet. Zur Bildung eines gegenüber dem Außenbereich des Formstücks 30 und somit auch gegenüber dem Strömungsraum für das Arbeitsmedium M in der Turbine 6 abgedichteten und abgeschotteten Strömungskanals 36 ist der Grundplatte 34 ein Leitblech 38 zugeordnet. Das aus einem vergleichsweise dünnen Blech gebildete, tiefgezogene Leitblech 38 erstreckt sich im wesentlichen über die gesamte Breite der Grundplatte 34 und ist an den seitlichen Enden der Grundplatte 34 auf dort angeformte Endrahmen 40, 42 aufgeschweißt. Das Leitblech 38 bildet somit gemeinsam mit der Grundplatte 34 einen sich im wesentlichen über die gesamte Breite der Grundplatte 34 erstreckenden Strömungskanal 36, so daß eine flächige Beaufschlagung der Grundplatte 34 mit im Strömungskanal 36 geführten Dampf als Kühlmittel gewährleistet ist.

Oberhalb des Leitblechs 38, also auf der der Grundplatte 34 abgewandten Seite des Leitblechs 38, ist ein zweites, ebenfalls tiefgezogenes Leitblech 44 angeordnet, das sich ebenfalls im wesentlichen über die gesamte Breite der Grundplatte 34 erstreckt und gemeinsam mit dem Leitblech 38 einen Zustromraum 46 für Dampf als Kühlmittel bildet. Seitlich ist das zweite Leitblech 44 ebenfalls auf die Endrahmen 40, 42 aufgeschweißt.

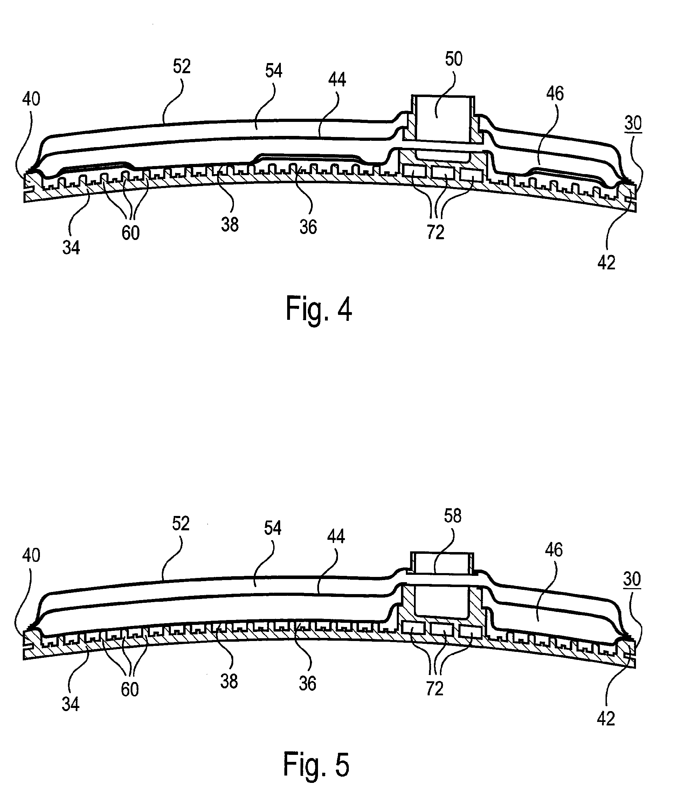

Der vom ersten Leitblech 38 und vom zweiten Leitblech 44 begrenzte Zustromraum 46 kommuniziert, wie dies insbesondere aus den Figuren 6 und 7 entnehmbar ist, in einem Einströmbereich 48 mit dem durch das erste Leitblech 38 und die Grundplatte 34 gebildeten Strömungskanal 36. Die Verbindung zwischen dem Zustromraum 46 und dem Strömungskanal 36 kann dabei über eine in Querrichtung des Formstücks 30 ausgedehnte schlitzartige Öffnung oder auch über eine Anzahl von im entsprechenden räumlichen Bereich angeordneten Bohrungen im ersten Leitblech 38 hergestellt sein. In den Zustromraum 46 mündet, wie dies aus Figur 4 entnehmbar ist, eine Dampfzuleitung 50, die an ihrem freien Ende mit geeigneten Mitteln wie beispielsweise einem Gewinde zur Anbringung einer Rohrverschraubung mit einer Dampfzuführungsleitung ausgestattet ist.

Zur Ableitung des als Kühlmittel vorgesehenen Dampfes aus dem Strömungskanal 36 in der Art einer geschlossenen Kühlung ist ein drittes, ebenfalls tiefgezogenes Leitblech 52 vorgesehen. Das dritte Leitblech 52 ist dabei unter Bildung eines Abströmraums 54 oberhalb vom zweiten Leitblech 44 angeordnet, so daß sich im wesentlichen eine übereinandergestapelte Bauweise der Leitbleche 38, 44, 52 auf der Grundplatte 34 ergibt. Das dritte Leitblech 52 ist endseitig ebenfalls auf die Endrahmen 40, 42 aufgeschweißt.

Der vom zweiten Leitblech 44 und dem dritten Leitblech 52 begrenzte Abströmraum 54 kommuniziert in einem Ableitbereich 56 mit dem Strömungskanal 36 für das Kühlmittel. Zur Ableitung des als Kühlmittel vorgesehenen Dampfes aus dem Abströmraum 54 mündet in diesen eine Dampfableitung 58. Analog zur Dampfzuleitung 50 ist auch die Dampfableitung 58 endseitig mit Mitteln zum Anbringen einer Dampfleitung, beispielsweise einem Gewinde zum Anbringen einer Rohrverschraubung, versehen.

Zur mechanischen Stabilisierung und um auch bei vergleichsweise hoher mechanischer und thermischer Beanspruchung eine ausreichende Festigkeit des Formstücks 30 zu gewährleisten, weist die Grundplatte 34 an ihrer dem Strömungskanal 36 zugewandten Oberseite eine Anzahl von im wesentlichen in axialer Richtung x des Führungsrings 21 verlaufenden Versteifungsrippen 60 auf. Die Versteifungsrippen 60 können dabei punktuell endseitig mit dem ersten Leitblech 38 in mechanischem Kontakt stehen, ohne daß hierbei jedoch eine Abdichtung vorgesehen wäre. Somit ist einerseits eine im wesentlichen flächige Beaufschlagung der Grundplatte 34 mit Kühlmittel gewährleisten, wobei andererseits die Versteifungsrippen 60 eine Anzahl von im wesentlichen parallel verlaufenden Strömungskanälen für das Kühlmittel bilden.

Die Dampfzuleitung 50 und die Dampfableitung 58 sind derart am Formstück 30 positioniert, daß eine zuverlässige Dampfzuund -abfuhr auch unter Verwendung von bei ähnlichen Gasturbinen mit offener Kühlung vorgesehenen Kühlmittelkanälen ermöglicht ist. Um eine daran angepaßte Positionierung der Dampfzuleitung 50 und der Dampfableitung 58 zu ermöglichen und zudem den für eine Montage der entsprechenden Rohrverschraubungen unter hohen Dichtigkeitsanforderungen benötigten Raum bereitzustellen, ist das Formstück 30 für eine zentrale Verhakung ausgebildet. Dazu sind eine Anzahl von in axialer Richtung x des Führungsrings 21 gesehen mittig am Formstück 30 angeordneten Trägerhaken 70 vorgesehen. Jeder Trägerhaken 70 ist dabei jeweils auf einige der Versteifungsrippen 60 aufgesetzt und erstreckt sich dabei in Querrichtung des Formstücks 30 gesehen über eine Mehrzahl der Versteifungsrippen 60. Wie insbesondere aus Figur 3 erkennbar ist, ist jeder Trägerhaken 70 dabei auf die jeweiligen Versteifungsrippen 60 derart aufgesetzt, daß jeweils zwei benachbarte Versteifungsrippen 60 gemeinsam mit der Grundplatte 34 und dem jeweiligen Trägerhaken 70 eine Anzahl von Durchströmöffnungen 72 bilden. Die Trägerhaken 70 sind somit in der Art einer untertunnelten Ausführung vom Kühlmittel unterströmt, so daß auftretende Wärmspannungen im Formstück 30 auch auf Beaufschlagung mit vergleichsweise hoher thermischer Last besonders gering gehalten sind. Die Trägerhaken 70 sind im übrigen mit angeformten Trägernasen 74 ausgebildet und mit entsprechenden Tragelementen an der Innenwand des Innengehäuses 16 der Turbine 6 in Eingriff bringbar.

In gleicher Weise sind im übrigen auch die Dampfzuleitung 50 und die Dampfableitung 58 auf jeweils einer Mehrzahl von Versteifungsrippen 60 unter Bildung von Durchströmöffnungen 72 für das Kühlmittel aufgesetzt.

Sowohl die Trägerhaken 70 als auch die Dampfzuleitung 50 und die Dampfableitung 58 sind in ihrer Außenkontur stufig ausgestaltet. Auf die erste Stufe der auf die Versteifungsrippen 60 aufgesetzten, vom Kühlmittel unterströmten Trägerhaken 70 sowie der Dampfzuleitung 50 und der Dampfableitung 58 ist zur weiteren Abstützung das erste Leitblech 38 ebenfalls aufgeschweißt. Analog sind auch das zweite Leitblech 44 und das dritte Leitblech 52 auf die zweite bzw. die dritte Stufe in der Außenkontur jedes Trägerhakens 70 sowie der Dampfzuleitung 50 und der Dampfableitung 58 aufgeschweißt. Die stapelartige Bauweise der drei übereinander angeordneten Leitbleche 38, 44, 52 ist somit von besonders großer mechanischer Stabilität.

Beim Formstück 30 entsteht somit in besonders einfacher Bauart und mit besonders geringem Herstellungsaufwand folgender geschlossene Strömungsweg für Dampf als Kühlmittel: von der Dampfzuleitung 50 gelangt der als Kühlmittel vorgesehene Dampf in den vom zweiten Leitblech 44 gemeinsam mit dem ersten Leitblech 38 gebildeten Zustromraum 46. In diesem wird der Dampf mittels des zweiten Leitblechs 44 zum Einströmbereich 48 geführt. Im Einströmbereich 48 gelangt der Dampf vom Zustromraum 46 in den eigentlichen Strömungskanal 36. Die Führung der Kühlmittelströmung über der heißgasbeaufschlagten Materialseite unter Sicherstellung eines vergleichsweise großen Strömungsquerschnitts ist sodann durch das erste Leitblech 38 gegeben. Vom Strömungskanal 36 gelangt das Kühlmittel in den Ableitbereich 56 und strömt dort in den Abströmraum 54 über, den das dritte Leitblech 52 gemeinsam mit dem zweiten Leitblech 44 bildet. Vom Abströmraum 54 gelangt das Kühlmittel anschließend zur Dampfableitung 58, von wo es über ein geschlossenes Rohrleitungssystem aus der Gasturbine 1 entfernt wird. Somit ist mit vergleichsweise einfachen Mitteln über die Leitbleche 38, 44, 52 eine Strömungsleitung des Kühlmittels in axialer Richtung x des Führungsrings 21 gewährleistet.

## Patentansprüche

1. Formstück (30) zur Bildung eines Führungsrings (20, 21) für eine Gasturbine (1) mit einer Grundplatte (34), die gemeinsam mit einem ihr zugeordneten Leitblech (38, 44, 52) einen sich im Querschnitt im wesentlichen über ihre gesamte Breite, bezogen auf die axiale Richtung (x) des Führungsrings (20, 21), erstreckenden Strömungskanal (36) für ein Kühlmittel bildet.

2. Formstück (30) nach Anspruch 1, bei dem das Leitblech (38) auf seiner der Grundplatte (34) abgewandten Seite gemeinsam mit einem zweiten Leitblech (44) einen in einem Einströmbereich (48) mit dem Strömungskanal (36) kommunizierenden Zustromraum (46) für das Kühlmittel bildet.

3. Formstück (30) nach Anspruch 2, bei dem die Dampfzuleitung (50) in den Zustromraum (46) mündet.

4. Formstück (30) nach Anspruch 2 oder 3, bei dem das zweite Leitblech (44) auf seiner dem Leitblech (44) abgewandten Seite gemeinsam mit einem dritten Leitblech (52) einen in einem Ableitbereich mit dem Strömungskanal (36) kommunizierenden Abströmraum (54) für das Kühlmittel bildet.

5. Formstück (30) nach Anspruch 4, bei dem eine Dampfableitung (58) in den Abströmraum (54) mündet.

6. Formstück (30) nach einem der Ansprüche 1 bis 5, dessen Grundplatte (34) oberseitig eine Anzahl von im wesentlichen in axialer Richtung (x) des Führungsrings (20, 21) verlaufende Versteifungsrippen (60) aufweist.

7. Formstück (30) nach Anspruch 6, bei dem jeweils an einer Mehrzahl benachbarter Versteifungsrippen (60) ein Trägerhaken (70) unter Bildung von durch die Grundplatte (34), jeweils zwei benachbarte Versteifungsrippen (60) und den jeweiligen Trägerhaken (70) begrenzten Durchströmöffnungen (72) angeordnet sind.

8. Formstück (30) nach Anspruch 7, bei dem der oder jeder Trägerhaken (70) in axialer Richtung (x) des Führungsringes (21) gesehen zentriert angeordnet ist.

9. Gasturbine (1) mit einer Anzahl von jeweils zu Laufschaufelreihen zusammengefaßten, an einer Turbinenwelle (8) angeordneten Laufschaufeln (12) und mit einer Anzahl von jeweils zu Leitschaufelreihen zusammengefaßten, mit einem Turbinengehäuse verbundenen Leitschaufeln (14), bei der im Innenbereich des Turbinengehäuses ein aus einer Anzahl von Formstücken (30) nach einem der Ansprüche 1 bis 8 zusammengesetzter Führungsring (20, 21) angeordnet ist.

10. Gasturbine (1) nach Anspruch 9, deren Führungsring (20, 21) in Strömungsrichtung eines Arbeitsmediums (M) gesehen zwischen der ersten Leitschaufelreihe und der zweiten Leitschaufelreihe angeordnet ist.
